# EUROPÄISCHE PATENTSCHRIFT

(11) **EP 3 290 904 B1**
(45) Veröffentlichungstag und Bekanntmachung des Hinweises auf die Patenterteilung: **17.04.2019**
(21) Anmeldenummer: 17185054.8
(22) Anmeldetag: 07.08.2017
(51) Int. Cl.: G01N 21/25, F21V 7/04, G01J 3/02, G01J 3/08, G01N 21/47, G01N 21/84, G01J 3/10, G01J 3/42, G01N 21/55

(54) **MESSLICHTQUELLE UND MESSANORDNUNG ZUM ERFASSEN EINES REFLEXIONSSPEKTRUMS**
MEASUREMENT LIGHT SOURCE AND MEASUREMENT ASSEMBLY FOR DETECTING A REFLECTION SPECTRUM
SOURCE LUMINEUSE DE MESURE ET DISPOSITIF DE MESURE PERMETTANT DE DÉTECTER UN SPECTRE DE RÉFLEXION

(30) Priorität: 02.09.2016 DE 102016116405; 19.04.2017 DE 202017102313 U
(43) Veröffentlichungstag der Anmeldung: 07.03.2018
(73) Patentinhaber: Carl Zeiss Spectroscopy GmbH, 07745 Jena (DE)
(72) Erfinder: MARGRAF, Jörg, 07426 Königsee-Rottenbach (DE); KEUNE, Thomas, 07745 Jena (DE)
(74) Vertreter: Engel, Christoph Klaus

(56) Entgegenhaltungen:
- DE-A1- 19 528 855
- DE-A1-102014 215 193
- FR-A- 860 868
- US-A- 3 977 787
- US-A1- 2008 078 544
- US-A1- 2009 108 213
- US-A1- 2016 230 958
- US-B1- 6 422 718

## Beschreibung

Die vorliegende Erfindung betrifft eine Messlichtquelle zum Erzeugen von Messlicht mit einer gleichmäßigen räumlichen Beleuchtungsstärkeverteilung. Im Weiteren betrifft die Erfindung eine Messanordnung zum Erfassen eines absoluten Reflexionsspektrums einer Probe und zum Durchführen einer Referenzmessung. Die Messanordnung dient insbesondere zur spektroskopischen Untersuchung von Oberflächen in Produktionsprozessen, um beispielsweise Farbe oder Glanz der Oberflächen zu bestimmen.

Die DE 10 2011 050 969 A1 zeigt eine Vorrichtung zur referenzierten Messung von reflektiertem Licht mit einem Hohlkörper, der in seinem Inneren eine diffus streuende Schicht aufweist und eine Lichtaustrittsöffnung besitzt. Die Vorrichtung ist von einer Messstellung in eine Kalibrierstellung umschaltbar, wodurch die Lichtaustrittsöffnung von einer ersten Detektionsachse in eine zweite Detektionsachse gebracht wird.

Aus der DE 10 2010 041 749 A1 ist eine Messeinrichtung mit einem sich in einer Längsrichtung erstreckenden Hohlraum bekannt, der eine einer Probe zuzuwendende Öffnung und einer Vielzahl von in der Längsrichtung angeordneten Öffnungen aufweist. Eine weitere Öffnung dient zum Einkoppeln von Licht.

Die US 6,422,718 B1, die DE 34 31 367 A1 und die
DE 20 2008 012 222 U1 zeigen Messlichtquellen in verschiedenen Ausführungsformen.

Die DE 10 2013 219 830 A1 lehrt ein optische Vorrichtung zur Reflexionsmessung unter diffuser Beleuchtung, die einen Hohlkörper mit einer lichtstreuenden Oberfläche in seinem Inneren und mit einer Lichtaustrittsöffnung umfasst. Die Lichtaustrittsöffnung besitzt eine rotationsasymmetrische Form.

Zur Erfassung eines absoluten Reflexionsspektrums sind aus dem Stand der Technik so genannte VW- und VN-Anordnungen bekannt, durch welche gewährleistet wird, dass sich eine Referenzmessung und eine Messung an einer Probe nur durch die Reflexion an der Probe unterscheiden.

Die DE 10 2014 215 193 A1 zeigt eine Messanordnung zur Erfassung eines absoluten Reflexionsspektrums einer Probe. Diese Messanordnung umfasst eine Lichtquelle und einen Homogenisator zur Erzeugung einer gleichmäßigen räumlichen Beleuchtungsstärkeverteilung des Messlichtes. Die Messanordnung umfasst weiterhin einen beweglichen Reflektor und einen Empfänger. Der Reflektor ist auf derselben Seite der die Probe wie die Lichtquelle angeordnet. Der Homogenisator ist bevorzugt durch eine Ulbricht-Kugel, durch eine Ulbricht-Röhre oder durch einen Kugel-Zylinder-Aufbau gebildet. Die Ulbricht-Kugel führt in dieser Messanordnung bei Probenabstandsänderungen oder bei Probenverkippungen zu Messfehlern der Absolutmessung von mehr als 1%, was für viele Anwendungen zu hoch ist. Außerhalb von Laborbedingungen, insbesondere bei Inline-Messungen in Produktionsprozessen sind Probenabstandsänderungen und Probenverkippungen jedoch nicht vermeidbar.

Die US 2009/0108213 A1 zeigt eine Strahlungsquelle mit einer ersten Kammer und mit einer zweiten Kammer, zwischen denen sich ein Zwischenraum befindet. In der ersten Kammer sind mehrere Lichtquellen angeordnet. Das Licht der Lichtquellen wird an einer sphärischen Innenwand der ersten Kammer reflektiert und gelangt über eine Öffnung in den Zwischenraum und weiter in die zweite Kammer, wo das Licht an der sphärischen Innenwand der zweiten Kammer und an einer diffus reflektierenden, gekrümmten Oberfläche reflektiert wird und schließlich durch einen Ausgang austritt.

Die Aufgabe der vorliegenden Erfindung besteht ausgehend vom Stand der Technik darin, die Gleichmäßigkeit der räumlichen Beleuchtungsstärkeverteilung eines Messlichtes im Vergleich zu dem mit einer Ulbricht-Kugel erzeugbaren Messlicht zu erhöhen, um genaue Messungen eines absoluten Reflexionsspektrums aufwandsärmer vornehmen zu können.

Die genannte Aufgabe wird gelöst durch eine Messlichtquelle gemäß dem beigefügten Anspruch 1. Die genannte Aufgabe wird weiterhin durch Messanordnungen gemäß den beigefügten nebengeordneten Ansprüchen 5 und 10 gelöst.

Die erfindungsgemäße Messlichtquelle dient zum Erzeugen von Messlicht mit einer gleichmäßigen räumlichen Beleuchtungsstärkeverteilung. Mit der erfindungsgemäßen Messlichtquelle können beispielsweise spektrometrische Untersuchungen von Oberflächen vorgenommen werden. Die Messlichtquelle umfasst zunächst einen Hohlkörper mit einer diffus reflektierenden Innenfläche. Der Innenraum ist in einen konkaven, hohlspiegelförmigen Beleuchtungsraum, einen rohrartigen Lichtformungsraum und einen konkaven, hohlspiegelförmigen Lichtaustrittsraum geteilt, die eine gemeinsame Achse aufweisen. Somit weisen die Hohlspiegelform des Beleuchtungsraumes, die Rohrform des Lichtformungsraumes und die Hohlspiegelform des Lichtaustrittsraumes jeweils eine Achse auf, wobei diese Achsen zusammenfallen und die Achse des Hohlkörpers und der Messlichtquelle bilden. Der Beleuchtungsraum und der Lichtaustrittsraum weisen zwar jeweils eine Hohlspiegelform auf, jedoch sind sie wie angegeben diffus reflektierend und stellen insoweit keine Hohlspiegel dar. Der Beleuchtungsraum und der Lichtaustrittsraum können auch jeweils als ein konkav geformter Reflektor oder als ein konkav geformter lambertianischer Reflektor charakterisiert werden.

In dem Beleuchtungsraum ist eine Lichtquelle zumindest teilweise angeordnet. Die Lichtquelle ist jedenfalls so angeordnet, dass durch sie Licht in den Beleuchtungsraum strahlbar ist, wobei sich die Lichtquelle teilweise außerhalb des Beleuchtungsraumes befinden kann. Die Lichtquelle ist bevorzugt auf bzw. in der Achse angeordnet. Die Lichtquelle ist bevorzugt in einem Brennpunkt der Hohlspiegelform des Beleuchtungsraumes angeordnet.

Der Lichtaustrittsraum weist einen Lichtaustritt auf, durch welchen Licht aus dem Lichtaustrittsraum nach außerhalb des Hohlkörpers treten kann. Der Lichtaustritt ist bevorzugt auf bzw. in der Achse angeordnet. Das aus dem Lichtaustritt tretende Licht bildet das durch die Messlichtquelle erzeugbare Messlicht.

Der Beleuchtungsraum und der Lichtaustrittsraum stehen sich mit ihren Hohlspiegelformen, d. h. mit ihren konkaven Reflektorformen gegenüber. Die Innenseiten der Hohlspiegelformen bzw. der konkaven Reflektorformen sind zueinander ausgerichtet. Der Beleuchtungsraum und der Lichtaustrittsraum stehen sich bevorzugt spiegelsymmetrisch mit ihren Hohlspiegelformen gegenüber. Der Beleuchtungsraum und der Lichtaustrittsraum kontaktieren sich jedoch nicht. Der rohrartige Lichtformungsraum ist zwischen dem Beleuchtungsraum und dem Lichtaustrittsraum angeordnet und verbindet den Lichtformungsraum und den Beleuchtungsraum. Somit kann Licht infolge von Reflexionen an der Innenfläche des Hohlkörpers aus dem Beleuchtungsraum über den Lichtformungsraum in den Lichtaustrittsraum gelangen. Die Hohlspiegelform des Beleuchtungsraumes gleicht bevorzugt der Hohlspiegelform des Lichtaustrittsraumes. Die Hohlspiegelform des Beleuchtungsraumes geht bevorzugt stetig in die Rohrform des Lichtformungsraumes über. Die Rohrform des Lichtformungsraumes geht bevorzugt stetig in die Hohlspiegelform des Lichtaustrittsraumes über. Somit gleichen sich bevorzugt ein Umfang der Hohlspiegelform des Beleuchtungsraumes, ein Umfang der Rohrform des Lichtformungsraumes und ein Umfang der Hohlspiegelform des Lichtaustrittsraumes.

Erfindungsgemäß ist im Hohlkörper eine diffus reflektierende Reflexionsscheibe angeordnet. Die Reflexionsscheibe dient zum Reflektieren des von der im Lichtaustrittsraum angeordneten Innenfläche des Hohlkörpers reflektierten Lichtes, sodass dieses durch den Lichtaustritt nach außerhalb des Hohlkörpers geworfen wird. Die Reflexionsscheibe ist bevorzugt eben. Die Reflexionsscheibe ist bevorzugt undurchsichtig, d. h. opak. Die Reflexionsscheibe schattet den Lichtaustritt gegenüber der Lichtquelle ab, sodass das Licht der Lichtquelle nicht direkt durch den Lichtaustritt treten kann.

Ein besonderer Vorteil der erfindungsgemäßen Messlichtquelle besteht darin, dass sie durch eine aufwandsarm zu realisierende Abwandlung einer Ulbricht-Kugel bzw. einer Ulbricht-Kugel-ähnlichen Kugel-Zylinder-Anordnung die Erzeugung eines Messlichtes mit einer äußerst gleichmäßigen räumlichen Beleuchtungsstärkeverteilung erlaubt.

Das mit der erfindungsgemäßen Messlichtquelle erzeugbare Messlicht weist in seiner räumlichen Beleuchtungsstärkeverteilung eine Abweichung von bevorzugt höchstens 0,2% auf. Hierdurch ist ein Inline-Einsatz der Messlichtquelle bei einer Messung eines absoluten Reflexionsspektrums möglich, da eine Probenabstandsvarianz, eine Probendickevariation und eine Probenverkippung tolerierbar sind.

Das durch die Lichtquelle erzeugbare Licht wird im Hohlkörper bevorzugt mindestens drei Mal reflektiert, bevor es aus dem Lichtaustritt tritt. Eine der mindestens drei Reflektionen erfolgt dabei auf der Reflexionsscheibe. Das durch die Lichtquelle erzeugbare Licht wird im Hohlkörper besonders bevorzugt mindestens vier Mal reflektiert, bevor es aus dem Lichtaustritt tritt. Ein großer Teil des Lichtes wird viele Male im Hohlkörper reflektiert, bevor es aus dem Lichtaustritt tritt.

Die diffus reflektierende Innenfläche des Hohlkörpers und die diffus reflektierende Oberfläche der Reflexionsscheibe weisen einen Reflexionsgrad im gesamten Lichtspektrum von bevorzugt mindestens 96%; besonders bevorzugt mindestens 98% auf. Die diffus reflektierende Innenfläche des Hohlkörpers und die diffus reflektierende Oberfläche der Reflexionsscheibe sind bevorzugt durch eine Beschichtung aus Polytetrafluorethylen (PTFE) gebildet.

Die Lichtquelle umfasst bevorzugt ein oder mehrere Lichtquellenelemente, welche bevorzugt jeweils durch eine Halogenlampe, durch eine Blitzlampe, durch eine Xenon-Blitzlampe, durch eine Deuteriumlampe, durch einen IR-Strahler, durch eine insbesondere weißleuchtende LED, durch eine UV-Kathode oder durch eine UV-LED gebildet sind. Die Lichtquelle umfasst besonders bevorzugt mehrere der Lichtquellenelemente, die bevorzugt durch die eine Halogenlampe, durch die eine weißleuchtende LED und durch zwei UV-LEDs gebildet sind. Die einzelnen Lichtquellenelemente sind bevorzugt einzeln schaltbar und/oder in ihrer Leistung veränderbar.

Die Lichtquelle umfasst bevorzugt weiterhin einen oder mehrere Lichtwellenleiter, über welchen bzw. über welche die Lichtquellenelemente in den Beleuchtungsraum strahlen können. Die jeweiligen Lichtquellenelemente befinden sich nicht im Beleuchtungsraum, sondern können außerhalb des Beleuchtungsraumes angeordnet sein. Jedenfalls mündet der Lichtwellenleiter bzw. münden die Lichtwellenleiter der Lichtquelle in den Beleuchtungsraum, sodass die Lichtquelle teilweise im Beleuchtungsraum angeordnet ist.

Bei bevorzugten Ausführungsformen der erfindungsgemäßen Messlichtquelle ist die Reflexionsscheibe auf der Achse und senkrecht zu der Achse angeordnet. Die Achse liegt bevorzugt in der Mitte der Reflexionsscheibe. Die Reflexionsscheibe ist bevorzugt oval-, ellipsen- oder kreisförmig.

Die Reflexionsscheibe ist bevorzugt dazu ausgebildet, eine direkte Beleuchtung der im Lichtaustrittsraum angeordneten Innenfläche des Hohlkörpers durch die Lichtquelle zu verhindern. Somit ist die Reflexionsscheibe dazu ausgebildet, die im Lichtaustrittsraum angeordnete Innenfläche des Hohlkörpers gegenüber der Lichtquelle abzuschatten. Diese Eigenschaft hat die opake Reflexionsscheibe im Wesentlichen bereits dadurch, dass sie zum Reflektieren des von der im Lichtaustrittsraum angeordneten Innenfläche des Hohlkörpers reflektierten Lichtes durch den Lichtaustritt ausgebildet ist, wofür sie bevorzugt auf der Achse angeordnet ist und bereits dadurch die im Lichtaustrittsraum angeordnete Innenfläche des Hohlkörpers gegenüber der Lichtquelle abschattet. Im Übrigen müssen die Position und die Größe der Reflexionsscheibe sowie der Querschnitt und die Länge des Lichtformungsraumes so aufeinander abgestimmt sein, dass die im Lichtaustrittsraum angeordnete Innenfläche des Hohlkörpers gegenüber der Lichtquelle abgeschattet ist.

Die Reflexionsscheibe weist auf ihrem äußeren Umfang bevorzugt einen Kragen in Richtung des Lichtaustrittsraumes auf. Der Kragen schattet die Reflexionsscheibe gegen seitlich sehr flach einfallendes Licht ab und weist bevorzugt wie der gesamte Hohlraum die diffus reflektierende Oberfläche auf.

Die Reflexionsscheibe ist bevorzugt im Lichtaustrittsraum, im Lichtformungsraum oder an einem Übergang von dem Lichtaustrittsraum zum Lichtformungsraum angeordnet. Die zuletzt genannte Position ist am besten geeignet, das von der im Lichtaustrittsraum angeordneten Innenfläche des Hohlkörpers reflektierte Licht zu reflektieren und durch den Lichtaustritt zu leiten.

Im Inneren des Lichtformungsraumes ist bevorzugt ein Lichtformungszylinder angeordnet, an dessen zum Lichtaustrittsraum gerichteten axialen Ende die Reflexionsscheibe angeordnet ist. Der Lichtformungszylinder weist bevorzugt wie der gesamte Hohlraum die diffus reflektierende Oberfläche auf. Der Lichtformungszylinder ist bevorzugt mittig in der Rohrform des Lichtformungsraumes angeordnet. Der Lichtformungszylinder ist bevorzugt in der Achse des Hohlkörpers angeordnet. Die Achse des Hohlkörpers bildet bevorzugt auch eine Achse des Lichtformungszylinders. Der Lichtformungszylinder besitzt bevorzugt eine gleiche axiale Länge wie der Lichtformungsraum. Der Lichtformungszylinder besitzt bevorzugt einen ovalen, ellipsenförmigen oder kreisförmigen Querschnitt. Der Lichtformungszylinder ist durch die Lichtquelle nicht überstrahlbar.

Zwischen der Mantelfläche des Lichtformungszylinders und der inneren Mantelfläche des Lichtformungsraumes ist ein hohlzylinderförmiger Reflexionsbereich ausgebildet, der zur Formung und Führung des aus dem Beleuchtungsraum austretenden Lichtes hin zum Lichtaustrittsraum ausgebildet ist. Zudem ist der Lichtformungszylinder dazu ausgebildet, eine direkte Beleuchtung der im Lichtaustrittsraum angeordneten Innenfläche des Hohlkörpers durch die Lichtquelle zu verhindern. Folglich ist der Lichtformungszylinder dazu ausgebildet, die im Lichtaustrittsraum angeordnete Innenfläche des Hohlkörpers gegenüber der Lichtquelle abzuschatten.

Der Lichtformungszylinder ist an dessen zum Beleuchtungsraum gerichteten axialen Ende bevorzugt hohl, um beispielsweise weiteren Bauraum für die Lichtquelle zu bieten.

Die Reflexionsscheibe und/oder der Lichtformungszylinder ist bevorzugt mit Stegen an der Innenfläche des Hohlkörpers im Lichtformungsraum befestigt. Die Stege verlaufen bevorzugt radial zur Achse. Die Stege weisen bevorzugt wie der gesamte Hohlraum die diffus reflektierende Oberfläche auf.

Die Hohlspiegelform des Beleuchtungsraumes ist bevorzugt durch eine hohle Halbkugel gebildet. Die Hohlspiegelform des Beleuchtungsraumes weist alternativ bevorzugt einen ellipsenförmigen oder eine ovalen Querschnitt senkrecht zur Achse auf.

Die Hohlspiegelform des Lichtaustrittsraumes ist bevorzugt durch eine hohle Halbkugel gebildet. Die Hohlspiegelform des Lichtaustrittsraumes weist alternativ bevorzugt einen ellipsenförmigen oder eine ovalen Querschnitt senkrecht zur Achse auf.

Der Lichtaustritt ist bevorzugt durch ein Schutzglas verschlossen, sodass der Hohlraum durch dieses Schutzglas verschlossen ist.

Die erfindungsgemäße Messanordnung dient zum Erfassen eines absoluten Reflexionsspektrums einer Probe. Die Messanordnung dient beispielsweise für eine Inline-Messung in einem Produktionsprozess für große beschichtete Flächen, wie Glasscheiben oder Folien zur Prüfung der Oberfläche. Für das Erfassen des absoluten Reflexionsspektrums ist eine Referenzprobe nicht erforderlich. Die Messanordnung erlaubt daher auch eine Referenzmessung eines verwendeten Messlichtes.

Eine erste Ausführungsform der Messanordnung umfasst zunächst die erfindungsgemäße Messlichtquelle zum Erzeugen des Messlichtes mit einer gleichmäßigen räumlichen Beleuchtungsstärkeverteilung.

Die erste Ausführungsform der Messanordnung umfasst weiterhin einen optischen Empfänger zum Empfangen von Licht, welcher zu der Messlichtquelle gegenüberliegend angeordnet ist. Bei dem zu empfangenden Licht handelt es sich um das Messlicht der Messlichtquelle, nachdem es einen Weg über die Probe oder einen Referenzweg genommen hat. Eine Eintrittsöffnung des Empfängers und eine Austrittsöffnung der Messlichtquelle sind abgesehen von einem Versatz aufeinander zu gerichtet.

Die erste Ausführungsform der Messanordnung ist dazu ausgebildet, parallel zu einer Oberfläche der Probe angeordnet zu werden. Insbesondere ist die Achse der Messlichtquelle parallel zur Oberfläche der Probe anzuordnen, nämlich mit einem Versatz zur Oberfläche der Probe.

Die erste Ausführungsform der Messanordnung umfasst ersten Spiegel, der auf der Achse der Messlichtquelle angeordnet ist und zum Reflektieren des aus dem Lichtaustritt austretenden Messlichtes der Messlichtquelle auf die Probe ausgerichtet ist. Der erste Spiegel ist bevorzugt starr angeordnet.

Die erste Ausführungsform der Messanordnung umfasst weiterhin einen zweiten Spiegel, der in mindestens zwei Stellungen stellbar ist. In einer ersten Stellung ist der zweite Spiegel zum Reflektieren des vom ersten Spiegel reflektierten Messlichtes zum Empfänger ausgerichtet. Somit ist die erste Stellung für eine Referenzmessung ausgebildet, da das Messlicht auf seinem Weg von der Messlichtquelle zum Empfänger zwar die Komponenten der Messanordnung, insbesondere den ersten und zweiten Spiegel, aber nicht die Probe passiert. Insoweit ist der erste Spiegel auch zum Reflektieren des aus dem Lichtaustritt austretenden Messlichtes der Messlichtquelle auf den zweiten Spiegel Probe ausgerichtet. In einer zweiten Stellung ist der zweite Spiegel zum Reflektieren des von der Probe reflektierten Messlichtes zum Empfänger ausgerichtet. Somit ist die zweite Stellung für eine Reflexionsmessung ausgebildet, da das Messlicht auf seinem Weg von der Messlichtquelle zum Empfänger von der Probe reflektiert wird.

Bevorzugt sind die Messlichtquelle, der Empfänger, der erste Spiegel und der zweite Spiegel gemeinsam auf einer Seite der Probe angeordnet. Entsprechend sind die Messlichtquelle, der Empfänger, der erste Spiegel und der zweite Spiegel dazu ausgebildet, gemeinsam auf einer Seite der Probe angeordnet zu werden.

Ein besonderer Vorteil der ersten Ausführungsform der erfindungsgemäßen Messanordnung besteht darin, dass sie sehr kompakt aufbaubar ist. Die Messlichtquelle und der Empfänger können mit nur einem geringen Versatz in einer Ebene angeordnet werden, während der erste Spiegel und zweite Spiegel platzsparend zwischen der Messlichtquelle und der Empfänger positioniert werden können.

Der optische Empfänger ist bevorzugt durch einen optischen Sensor, wie insbesondere ein Spektrometer, oder zumindest durch einen optischen Eingang des optischen Sensors gebildet. Beispielsweise kann der optische Empfänger durch eine Eingangsoptik gebildet sein, an welche ein Lichtwellenleiter angeschlossen ist, der zu einem Spektrometer führt.

Der Empfänger weist eine Achse auf, in welcher er eintretendes Licht empfängt. Die Achse des Empfängers und die Achse der Messlichtquelle sind bei der ersten Ausführungsform der erfindungsgemäßen Messanordnung besonders bevorzugt parallel angeordnet und weisen einen Versatz, d. h. einen Abstand zueinander auf. Dieser Versatz kann jedoch klein dimensioniert werden. Der Versatz ist bevorzugt kleiner als eine maximale Ausdehnung des Hohlkörpers in einer Richtung senkrecht zur Achse der Messlichtquelle. Der zweite Spiegel liegt bevorzugt auf der Achse des Empfängers.

Der erste Spiegel ist bei der ersten Ausführungsform der erfindungsgemäßen Messanordnung bevorzugt um einen Winkel von 45° gegenüber der Achse der Messlichtquelle hin zur Probe geneigt. Somit wird das Messlicht von der Messlichtquelle um 90° gegenüber der Achse der Messlichtquelle abgelenkt und kann, wenn sich der zweite Spiegel in der zweiten Stellung befindet, senkrecht auf die Oberfläche der Probe fallen.

Der zweite Spiegel ist bei der ersten Ausführungsform der erfindungsgemäßen Messanordnung bevorzugt durch ein Schwenken des zweiten Spiegels von seiner ersten Stellung in seine zweite Stellung und umgekehrt zu stellen. Somit ist der zweite Spiegel bevorzugt ortsfest, aber drehbar. Die Achse dieser Schwenkbewegung ist bevorzugt durch eine der vier Seiten des bevorzugt rechteckförmigen zweiten Spiegels gebildet. Die Achse dieser Schwenkbewegung liegt bevorzugt senkrecht zur Achse des Empfängers und parallel zur Oberfläche der Probe.

Der zweite Spiegel ist bei der ersten Ausführungsform der erfindungsgemäßen Messanordnung in seiner ersten Stellung bevorzugt um einen Winkel von 45°±5° gegenüber der Achse des Empfängers hin zum ersten Spiegel geneigt. Somit wird das vom ersten Spiegel reflektierte Messlicht, welches bevorzugt 90° zur Achse der Messlichtquelle bzw. des Empfängers ausgerichtet ist, erneut um 90° abgelenkt, sodass es in der Achse des optischen Empfängers zum Empfänger gelangen kann.

Der zweite Spiegel ist bei der ersten Ausführungsform der erfindungsgemäßen Messanordnung in seiner zweiten Stellung bevorzugt um einen Winkel von 45°±5° gegenüber der Achse des Empfängers hin zur Probe ausgerichtet. Somit wird das von der Probe reflektierte Messlicht abgelenkt, sodass es in der Achse des Empfängers zum Empfänger gelangen kann.

Der zweite Spiegel ist bei der ersten Ausführungsform der erfindungsgemäßen Messanordnung bevorzugt zwischen seiner ersten Stellung, seiner zweiten Stellung und einer dritten Stellung schwenkbar. Die dritte Stellung ist für eine Transmissionsmessung der Probe ausgebildet. Hierfür umfasst die Messanordnung weiterhin einen vierten Spiegel, der auf der dem ersten Spiegel gegenüberliegenden Seite der Probe angeordnet ist. Der vierte Spiegel ist zur Reflektion des vom ersten Spiegel reflektierten durch die Probe transmittierten Messlichtes zurück zur Probe und zum zweiten Spiegel ausgebildet. Somit transmittiert das Messlicht die Probe genau zwei Mal, nämlich ein erstes Mal, bevor es auf den vierten Spiegel trifft, und ein zweites Mal, nachdem es vom vierten Spiegel reflektiert wurde. Das zweifach transmittierte Messlicht wird dann vom zweiten Spiegel zum Empfänger reflektiert. Der vierte Spiegel ist bevorzugt starr angeordnet. Der vierte Spiegel ist bevorzugt parallel zur Achse der Messlichtquelle und bevorzugt parallel zur flächigen Probe angeordnet.

Der zweite Spiegel ist bei der ersten Ausführungsform der erfindungsgemäßen Messanordnung in seiner dritten Stellung weiter zur Probe geneigt als in seiner zweiten Stellung. Der zweite Spiegel ist in seiner dritten Stellung bevorzugt um einen Winkel zwischen 40° und 70°, insbesondere zwischen 47° und 60° gegenüber der Achse des Empfängers hin zur Probe geneigt.

Der zweite Spiegel ist bevorzugt zwischen seiner ersten Stellung, seiner zweiten Stellung und einer vierten Stellung schwenkbar, wobei die vierte Stellung für eine Dunkelmessung ausgebildet ist. In dieser vierten Stellung wirft der zweite Spiegel kein Messlicht auf den Empfänger. Hierfür ist der zweite Spiegel in seiner vierten Stellung bevorzugt senkrecht zur Achse des Empfängers hin zum Empfänger ausgerichtet. Die Dunkelmessung dient gemeinsam mit der Referenzmessung zum Abgleich der Messanordnung, um mit der Messanordnung eine genaue Messung des absoluten Reflexionsspektrums vornehmen zu können.

Der zweite Spiegel ist bei der ersten Ausführungsform der erfindungsgemäßen Messanordnung bevorzugt zwischen seiner ersten Stellung, seiner zweiten Stellung, seiner dritten Stellung und seiner vierten Stellung schwenkbar.

Die Messlichtquelle, der Empfänger, der erste Spiegel und der zweite Spiegel bilden bevorzugt einen Messkopf. Der Messkopf umfasst ein Gehäuse, in welchem die Messlichtquelle, der Empfänger, der erste Spiegel und der zweite Spiegel angeordnet sind. Das Gehäuse weist eine Messöffnung auf, durch welche das vom ersten Spiegel reflektierte Messlicht nach außen treten kann und durch welche das von der Probe reflektierte Messlicht nach innen zum zweiten Spiegel treten kann.

Eine zweite Ausführungsform der Messanordnung umfasst zunächst eine Messlichtquelle zum Erzeugen des Messlichtes mit einer gleichmäßigen räumlichen Beleuchtungsstärkeverteilung. Die Messlichtquelle besitzt einen Lichtaustritt, der auf bzw. in einer Achse der Messlichtquelle angeordnet ist. Das aus dem Lichtaustritt tretende Licht bildet das durch die Messlichtquelle erzeugbare Messlicht. Diese Messlichtquelle ist bevorzugt durch die oben beschriebene erfindungsgemäße Messlichtquelle gebildet.

Die zweite Ausführungsform der Messanordnung umfasst weiterhin einen optischen Empfänger zum Empfangen von Licht, welcher zu der Messlichtquelle gegenüberliegend angeordnet ist. Bei dem zu empfangenden Licht handelt es sich um das Messlicht der Messlichtquelle, nachdem es einen Weg über die Probe oder einen Referenzweg genommen hat. Eine Eintrittsöffnung des Empfängers und eine Austrittsöffnung der Messlichtquelle sind abgesehen von einem möglichen Versatz aufeinander zu gerichtet. Der Empfänger weist eine Achse auf, in welcher er eintretendes Licht empfängt.

Die zweite Ausführungsform der Messanordnung ist dazu ausgebildet, parallel zu einer Oberfläche der Probe angeordnet zu werden. Insbesondere ist die Achse der Messlichtquelle parallel zur Oberfläche der Probe anzuordnen, nämlich mit einem Versatz zur Oberfläche der Probe.

Die zweite Ausführungsform der Messanordnung umfasst ersten Spiegel, der auf bzw. in der Achse des optischen Empfängers angeordnet ist und zum Reflektieren des von der Probe reflektierten Lichtes zum optischen Empfänger ausgerichtet ist. Der erste Spiegel ist bevorzugt starr angeordnet.

Die zweite Ausführungsform der Messanordnung umfasst weiterhin einen zweiten Spiegel, der in mindestens zwei Stellungen stellbar ist. In einer ersten Stellung ist der zweite Spiegel zum Reflektieren des aus dem Lichtaustritt austretenden Messlichtes auf den ersten Spiegel ausgerichtet. Somit ist die erste Stellung für eine Referenzmessung ausgebildet, da das Messlicht auf seinem Weg von der Messlichtquelle zum Empfänger zwar die Komponenten der Messanordnung, insbesondere den ersten und zweiten Spiegel, aber nicht die Probe passiert. Insoweit ist der erste Spiegel auch zum Reflektieren des von dem zweiten Spiegel reflektierten Lichtes zu dem optischen Empfänger ausgerichtet. In einer zweiten Stellung ist der zweite Spiegel zum Reflektieren des aus dem Lichtaustritt austretenden Messlichtes auf die Probe ausgerichtet. Somit ist die zweite Stellung für eine Reflexionsmessung ausgebildet, da das Messlicht auf seinem Weg von der Messlichtquelle zum Empfänger von der Probe reflektiert wird.

Bevorzugt sind die Messlichtquelle, der Empfänger, der erste Spiegel und der zweite Spiegel gemeinsam auf einer Seite der Probe angeordnet. Entsprechend sind die Messlichtquelle, der Empfänger, der erste Spiegel und der zweite Spiegel dazu ausgebildet, gemeinsam auf einer Seite der Probe angeordnet zu werden.

Ein besonderer Vorteil der zweiten Ausführungsform der erfindungsgemäßen Messanordnung besteht darin, dass sie sehr kompakt aufbaubar ist. Die Messlichtquelle und der Empfänger können mit nur einem geringen Versatz in einer Ebene angeordnet werden, während der erste Spiegel und zweite Spiegel platzsparend zwischen der Messlichtquelle und der Empfänger positioniert werden können.

Die zweite Ausführungsform der Messanordnung ist zur Vermessung von Proben mit sehr unterschiedlich großen Dicken geeignet. Bevorzugt ist die erfindungsgemäße Messanordnung zur Vermessung einer Probe mit einer Dicke von bis zu 20 mm ausgebildet. Bevorzugt ist die erfindungsgemäße Messanordnung zur Vermessung von Glasscheiben ausgebildet. Selbstverständlich können auch Proben mit einer verschwindend geringen Dicke im nm- oder µm-Bereich mit der erfindungsgemäßen Messanordnung vermessen werden.

Der optische Empfänger ist bevorzugt durch einen optischen Sensor, wie insbesondere ein Spektrometer, oder zumindest durch einen optischen Eingang des optischen Sensors gebildet. Beispielsweise kann der optische Empfänger durch eine Eingangsoptik gebildet sein, an welche ein Lichtwellenleiter angeschlossen ist, der zu einem Spektrometer führt.

Die Achse des Empfängers und die Achse der Messlichtquelle sind bei der zweiten Ausführungsform der erfindungsgemäßen Messanordnung besonders bevorzugt parallel angeordnet und weisen einen Versatz, d. h. einen Abstand zueinander auf. Dieser Versatz kann jedoch klein dimensioniert werden. Der Versatz ist bevorzugt kleiner als die Hälfte einer maximalen Ausdehnung der Messlichtquelle in einer Richtung senkrecht zur Achse der Messlichtquelle.

Der erste Spiegel ist in seiner ersten Stellung und in seiner zweiten Stellung jeweils auf der Achse bzw. in der Achse der Messlichtquelle angeordnet, sodass das aus dem Lichtaustritt austretende Messlicht auf den ersten Spiegel trifft.

Der erste Spiegel ist bei der zweiten Ausführungsform der erfindungsgemäßen Messanordnung bevorzugt um einen Winkel von 45°±5° gegenüber der Achse des optischen Empfängers hin zur Probe geneigt. Somit wird das von der Probe reflektierte Messlicht, welches auf den ersten Spiegel trifft, wenn sich der zweite Spiegel nicht in seiner ersten Stellung befindet, um etwa 90° abgelenkt und trifft auf den optischen Empfänger.

Der zweite Spiegel ist bei der zweiten Ausführungsform der erfindungsgemäßen Messanordnung bevorzugt durch ein Schwenken des zweiten Spiegels von seiner ersten Stellung in seine zweite Stellung und umgekehrt zu stellen. Somit ist der zweite Spiegel bevorzugt ortsfest, aber um eine Achse drehbar bzw. schwenkbar. Die Achse dieser Schwenkbewegung ist bevorzugt durch eine der vier Seiten des bevorzugt rechteckförmigen zweiten Spiegels gebildet. Die Achse dieser Schwenkbewegung liegt bevorzugt senkrecht zur Achse der Messlichtquelle und parallel zur Oberfläche der Probe. Die Achse dieser Schwenkbewegung ist bevorzugt zwischen der Achse der Messlichtquelle und der Achse des optischen Empfängers angeordnet.

Der zweite Spiegel ist bei der zweiten Ausführungsform der erfindungsgemäßen Messanordnung in seiner ersten Stellung bevorzugt um einen Winkel von 50°±5° gegenüber der Achse der Messlichtquelle hin zum ersten Spiegel geneigt und ausgerichtet. Somit wird das aus dem Lichtaustritt austretende Messlicht, welches bevorzugt in der Achse der Messlichtquelle liegt, vom zweiten Spiegel um etwa 90° abgelenkt, sodass es etwa senkrecht zur Achse des optischen Empfängers auf den ersten Spiegel trifft, von welchem es erneut um etwa 90° abgelenkt wird, sodass es auf den optischen Empfänger trifft.

Der zweite Spiegel ist in seiner zweiten Stellung bevorzugt um einen Winkel von 50°±5° gegenüber der Achse der Messlichtquelle hin zur Probe geneigt und ausgerichtet. Somit wird das aus dem Lichtaustritt austretende Messlicht abgelenkt, sodass es auf die Probe trifft.

Der zweite Spiegel ist bei der zweiten Ausführungsform der erfindungsgemäßen Messanordnung bevorzugt zwischen seiner ersten Stellung, seiner zweiten Stellung und einer dritten Stellung stellbar. Die dritte Stellung ist für eine Transmissionsmessung der Probe ausgebildet. Hierfür umfasst die Messanordnung weiterhin einen dritten Spiegel, der auf der Achse der Messlichtquelle angeordnet ist und zum Reflektieren des aus dem Lichtaustritt austretenden Messlichtes hin zur Probe ausgerichtet ist. Der dritte Spiegel ist bevorzugt starr angeordnet. Der dritte Spiegel ist bevorzugt um einen Winkel von 45°±5° gegenüber der Achse der Messlichtquelle hin zur Probe geneigt. Die zweite Ausführungsform der Messanordnung umfasst weiterhin einen vierten Spiegel, der auf der dem dritten Spiegel gegenüberliegenden Seite der Probe angeordnet ist. Der vierte Spiegel ist zur Reflektion des vom dritten Spiegel reflektierten durch die Probe transmittierten Messlichtes zurück zur Probe und zum ersten Spiegel ausgerichtet. Somit transmittiert das Messlicht die Probe genau zwei Mal, nämlich ein erstes Mal, bevor es auf den vierten Spiegel trifft, und ein zweites Mal, nachdem es vom vierten Spiegel reflektiert wurde. Das zweifach transmittierte Messlicht wird dann vom ersten Spiegel zum optischen Empfänger reflektiert. Der vierte Spiegel ist bevorzugt starr angeordnet. Der vierte Spiegel ist bevorzugt parallel zur Achse der Messlichtquelle und bevorzugt parallel zur flächigen Probe angeordnet.

Der zweite Spiegel ist bei der zweiten Ausführungsform der erfindungsgemäßen Messanordnung bevorzugt durch ein Schwenken zwischen seiner ersten Stellung, seiner zweiten Stellung und seiner dritten Stellung stellbar.

Der zweite Spiegel ist bei der zweiten Ausführungsform der erfindungsgemäßen Messanordnung in seiner dritten Stellung so ausgerichtet, dass er einen Strahlengang vom Lichtaustritt zum dritten Spiegel freigibt. Somit befindet sich der zweite Spiegel in seiner dritten Stellung bevorzugt nicht im Strahlengang. Der zweite Spiegel ist in seiner dritten Stellung bevorzugt um einen Winkel zwischen -20° und 20° gegenüber der Achse der Messlichtquelle geneigt und von dieser Achse beabstandet angeordnet.

Der zweite Spiegel muss bei den beschriebenen bevorzugten Ausführungen für einen Wechsel von seiner für eine Reflexionsmessung geeigneten zweiten Stellung zu seiner für eine Transmissionsmessung geeigneten dritten Stellung bzw. umgekehrt um einen Winkel von bevorzugt 60°±20° und weiter bevorzugt 60°±5° geschwenkt werden. Dieser vergleichsweise große Schwenkwinkel führt zu einer hohen photometrischen Richtigkeit insbesondere bei der Transmissionsmessung, da bei der Transmissionsmessung eine Verfälschung der Messung durch Reflexionssignale weitestgehend vermieden ist.

Der zweite Spiegel ist bei der zweiten Ausführungsform der erfindungsgemäßen Messanordnung bevorzugt zwischen seiner ersten Stellung, seiner zweiten Stellung und einer vierten Stellung stellbar, wobei die vierte Stellung für eine Dunkelmessung ausgebildet ist. In dieser vierten Stellung wirft der zweite Spiegel kein Messlicht auf die Probe. Der zweite Spiegel ist in seiner vierten Stellung so ausgerichtet, dass er einen Strahlengang von der Probe zum ersten Spiegel freigibt. Somit befindet sich zweite Spiegel in seiner vierten Stellung bevorzugt nicht im Strahlengang von der Probe auf den ersten Spiegel. In der vierten Stellung ist der zweite Spiegel bevorzugt so ausgerichtet, dass er das aus dem Lichtaustritt tretende Messlicht zurück auf den Lichtaustritt reflektiert. Hierfür ist der zweite Spiegel in seiner vierten Stellung bevorzugt senkrecht zur Achse der Messlichtquelle ausgerichtet. Von keinem der Spiegel wird Messlicht auf die Probe gerichtet. Die Dunkelmessung dient gemeinsam mit der Referenzmessung zum Abgleich der Messanordnung, um mit der Messanordnung eine genaue Messung des absoluten Reflexionsspektrums vornehmen zu können.

Der zweite Spiegel ist bei der zweiten Ausführungsform der erfindungsgemäßen Messanordnung bevorzugt durch ein Schwenken zwischen seiner ersten Stellung, seiner zweiten Stellung und seiner vierten Stellung stellbar.

Der zweite Spiegel ist bevorzugt zwischen seiner ersten Stellung, seiner zweiten Stellung, seiner dritten Stellung und seiner vierten Stellung stellbar. Der zweite Spiegel ist bevorzugt zwischen seiner ersten Stellung, seiner zweiten Stellung, seiner dritten Stellung und seiner vierten Stellung schwenkbar.

Die Messlichtquelle, der Empfänger, der erste Spiegel, der zweite Spiegel und ggf. der dritte Spiegel bilden bevorzugt einen Messkopf. Der Messkopf umfasst ein Gehäuse, in welchem die Messlichtquelle, der Empfänger, der erste Spiegel, der zweite Spiegel und ggf. der dritte Spiegel angeordnet sind. Das Gehäuse weist eine Messöffnung auf, durch welche das vom zweiten Spiegel reflektierte Messlicht und ggf. das vom dritten Spiegel reflektierte Messlicht nach außen treten kann und durch welche das von der Probe reflektierte Messlicht und ggf. das vom vierten Spiegel reflektierte Messlicht nach innen zum ersten Spiegel treten kann.

Die Messlichtquelle der beschriebenen Ausführungsformen der erfindungsgemäßen Messanordnung ist bevorzugt durch eine der beschriebenen bevorzugten Ausführungsformen der erfindungsgemäßen Messlichtquelle gebildet. Im Übrigen weisen die beschriebenen Ausführungsformen der erfindungsgemäßen Messanordnung bevorzugt auch weitere Merkmale auf, die im Zusammenhang mit der erfindungsgemäßen Messlichtquelle und deren bevorzugten Ausführungsformen angegeben sind.

Weitere Einzelheiten und Weiterbildungen der Erfindung ergeben sich aus der nachfolgenden Beschreibung bevorzugter Ausführungsformen der Erfindung, unter Bezugnahme auf die Zeichnung. Es zeigen:
- Fig. 1:: einen Querschnitt durch eine bevorzugte Ausführungsform einer erfindungsgemäßen Messlichtquelle;
- Fig. 2:: einen weiteren Querschnitt durch die in Fig. 1 gezeigte Messlichtquelle;
- Fig. 3:: einen Querschnitt durch eine erste bevorzugte Ausführungsform einer erfindungsgemäßen Messanordnung in einer Stellung für eine Referenzmessung;
- Fig. 4:: die in Fig. 3 gezeigte Messanordnung in einer Stellung für eine Reflexionsmessung;
- Fig. 5:: die in Fig. 3 gezeigte Messanordnung in einer Stellung für eine Transmissionsmessung;
- Fig. 6:: die in Fig. 3 gezeigte Messanordnung in einer Stellung für eine Dunkelmessung;
- Fig. 7:: einen Querschnitt durch eine zweite bevorzugte Ausführungsform der erfindungsgemäßen Messanordnung in einer Stellung für eine Referenzmessung;
- Fig. 8:: die in Fig. 7 gezeigte Messanordnung in einer Stellung für eine Reflexionsmessung;
- Fig. 9:: die in Fig. 7 gezeigte Messanordnung in einer Stellung für eine Transmissionsmessung; und
- Fig. 10:: die in Fig. 7 gezeigte Messanordnung in einer Stellung für eine Dunkelmessung.

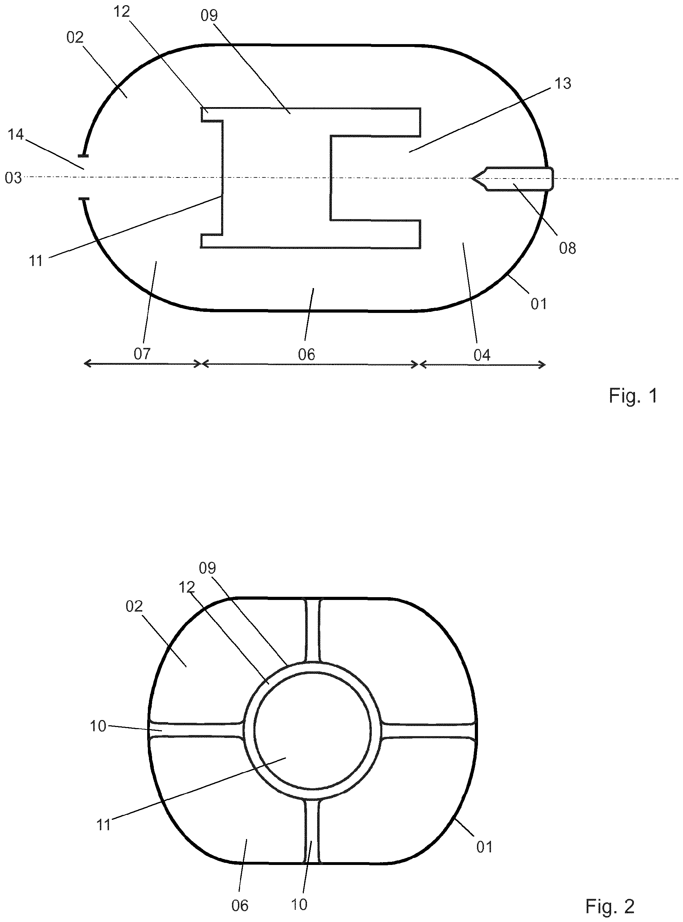

Fig. 1 zeigt einen Querschnitt durch eine bevorzugte Ausführungsform einer erfindungsgemäßen Messlichtquelle. Die Messlichtquelle ähnlich wie eine Ulbricht-Kugel einen Hohlkörper 01, in welchem ein Hohlraum 02 ausgebildet ist, der diffus reflektierende Oberfläche mit einem Reflexionsgrad im gesamten Lichtspektrum von mindestens 98% besitzt. Hierfür ist die innere Oberfläche des Hohlkörpers 01 im Hohlraum 02 mit PTFE beschichtet. Der Hohlraum 02 erstreckt sich entlang einer Achse 03.

Der Hohlraum 02 im Hohlkörper 01 ist in drei axiale Abschnitte geteilt, nämlich in einem hohlspiegelförmigen Beleuchtungsraum 04, in einen rohrartigen Lichtformungsraum 06 und in einen hohlspiegelförmiger Lichtaustrittsraum 07.

Im hohlspiegelförmigen Beleuchtungsraum 03 ist in der Achse 03 eine Lichtquelle 08 angeordnet, die eine Halogenlampe, eine weißleuchtende LED und zwei UV-LEDs umfasst, die im Einzelnen nicht dargestellt sind. Im rohrartigen Lichtformungsraum 06 ist ein Lichtformungszylinder 09 mit der diffus reflektierenden Oberfläche angeordnet, der eine gleiche axiale Länge wie der rohrartige Lichtformungsraum 06 besitzt. Der Lichtformungszylinder 09 ist über Haltestege 10 (zur besseren Veranschaulichung ausschließlich in Fig. 2 gezeigt) am Hohlkörper 01 befestigt. An seiner zum Lichtaustrittsraum 07 gerichteten Deckfläche weist der Lichtformungszylinder 09 eine diffus reflektierende ebene Reflexionsscheibe 11 auf. Die Reflexionsscheibe 11 ist senkrecht zur Achse 03 angeordnet, wobei die Reflexionsscheibe 11 mittig in der Achse 03 liegt. Die diffus reflektierende Oberfläche der Reflexionsscheibe 11 ist durch einen Kragen 12 berandet. An seiner zum Beleuchtungsraum 04 gerichteten Deckfläche weist der Lichtformungszylinder 09 eine hohle Öffnung 13 auf, welche beispielsweise einen Bauraum für längere Ausführungsformen der Lichtquelle 08 bietet. Der Lichtaustrittsraum 07 weist einen Lichtaustritt 14 auf, der ebenfalls in der Achse 03 liegt.

Fig. 2 zeigt einen weiteren Querschnitt durch die in Fig. 1 gezeigte Messlichtquelle. Dieser Querschnitt liegt senkrecht zu der Achse 03 (gezeigt in Fig. 1) und in der Ebene der Reflexionsscheibe 11. In dieser Querschnittsdarstellung sind auch die Haltestege 10 gezeigt. Weiterhin ist in dieser Querschnittsdarstellung erkennbar, dass der Hohlkörper 01 einen ovalen Querschnitt aufweist, wodurch im Vergleich zu einem kreisförmigen Querschnitt etwas Bauraum gespart werden kann.

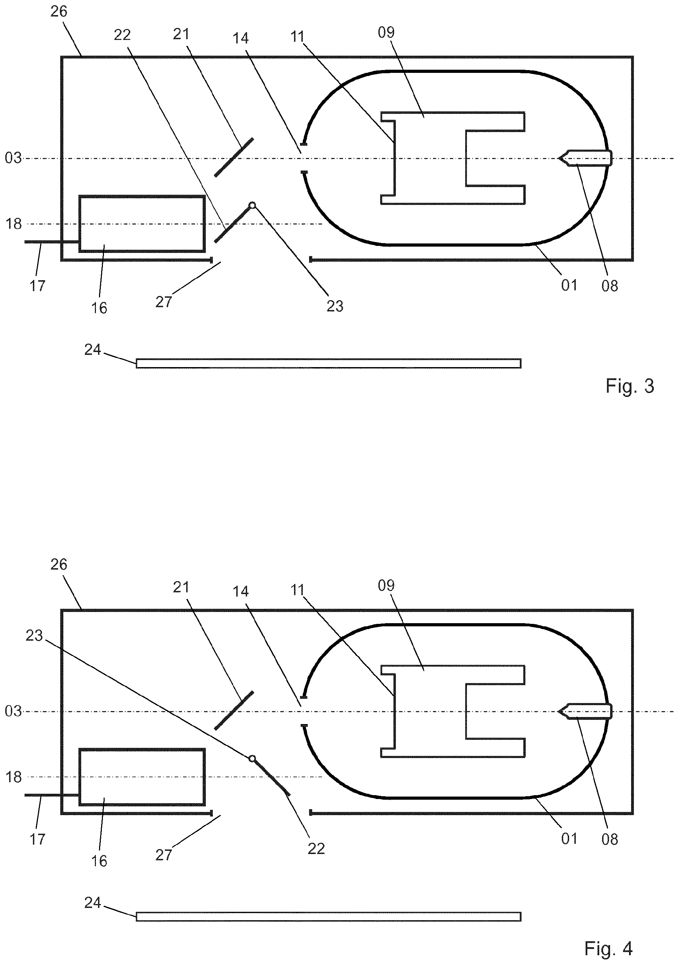

Fig. 3 zeigt einen Querschnitt durch eine erste bevorzugte Ausführungsform einer erfindungsgemäßen Messanordnung. Diese erste Ausführungsform weist die in Fig. 1 gezeigte Messlichtquelle, umfassend u. a. den Hohlkörper 01, die Lichtquelle 08 und die Reflexionsscheibe 11, auf. Die erste bevorzugte Ausführungsform der Messanordnung umfasst weiterhin einen optischen Empfänger 16, an den ein Lichtwellenleiter 17 angeschlossen ist, welcher zu einem Spektrometer (nicht gezeigt) geführt ist. Der optische Empfänger 16 weist eine Achse 18 auf, in welcher er Messlicht empfangen kann. Die Achse 18 des optischen Empfängers 16 ist parallel zur Achse 03 der Messlichtquelle angeordnet.

Die erste bevorzugte Ausführungsform der Messanordnung umfasst weiterhin einen starr angeordneten ersten Spiegel 21, der in der Achse 03 der Messlichtquelle liegt, sodass er das aus dem Lichtaustritt 14 austretende Messlicht empfängt. Der erste Spiegel 21 ist gegenüber der Achse 03 um einen Winkel von 45° geneigt. Hierdurch ist der erste Spiegel 21 hin zu einem zweiten Spiegel 22 ausgerichtet, der um eine Schwenkachse 23 schwenkbar ist.

Der zweite Spiegel 22 ist in einer ersten Schwenkstellung gezeigt, in welcher er um einen Winkel von 45° gegenüber der Achse 18 des optischen Empfängers 16 geneigt ist und hin zum optischen Empfänger 16 ausgerichtet ist. Somit reflektiert der zweite Spiegel 22 das vom ersten Spiegel 21 auf den zweiten Spiegel 22 gerichtete Messlicht unmittelbar auf den Empfänger 16, sodass das Messlicht nicht auf eine zu vermessende Probe 24 fällt. Somit dient die erste Stellung des zweiten Spiegels 22 für eine Referenzmessung, da unmittelbar das aus der Messlichtquelle austretende und von den beiden Spiegeln 21, 22 reflektierte Messlicht mithilfe des Empfängers 16 gemessen wird.

Die erste bevorzugte Ausführungsform der Messanordnung umfasst ein Gehäuse 26, in welchem die Messlichtquelle, der Empfänger 16 und die beiden Spiegel 21, 22 angeordnet sind, sodass ein Messkopf ausgebildet ist. Das Gehäuse 26 weist eine Messöffnung 27 auf, die über der zu vermessenden Probe 24 zu platzieren ist. Die Probe 24 ist parallel zu der Achse 18 des optischen Empfängers 16 und somit auch parallel zu der Achse 03 der Messlichtquelle anzuordnen.

Fig. 4 zeigt die in Fig. 3 gezeigte erste bevorzugte Ausführungsform der Messanordnung in einer Stellung für eine Reflexionsmessung. Hierfür befindet sich der zweite Spiegel 22 in einer zweiten Schwenkstellung, in welcher er um einen Winkel von 45° gegenüber der Achse 18 des optischen Empfängers 16 geneigt ist und hin zur Probe 24 ausgerichtet ist.

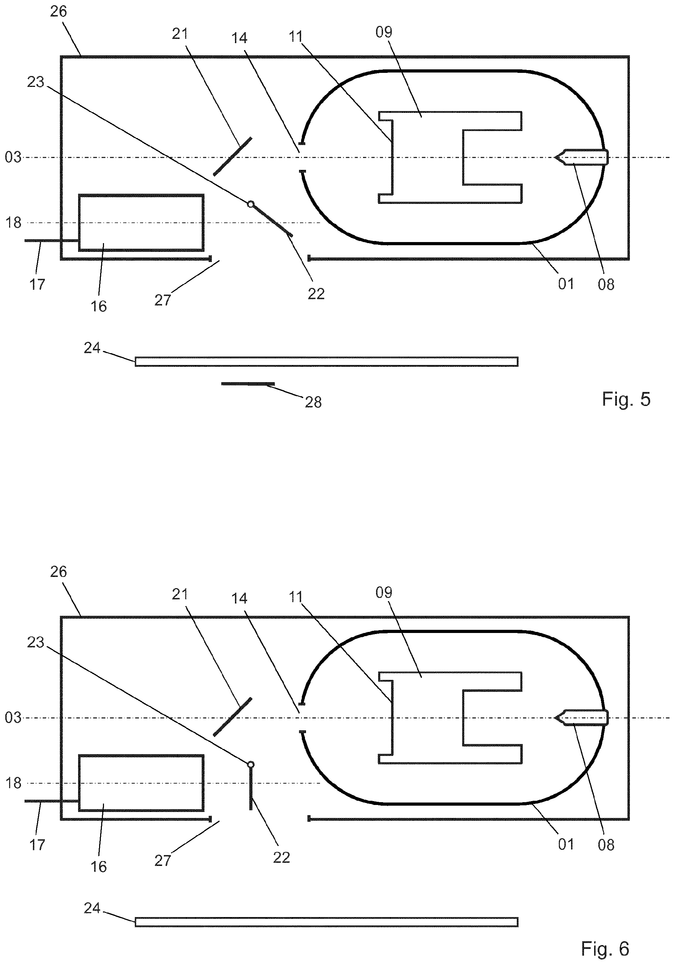

Fig. 5 zeigt die in Fig. 3 gezeigte erste bevorzugte Ausführungsform der Messanordnung in einer Stellung für eine Transmissionsmessung. Hierfür befindet sich der zweite Spiegel 22 in einer dritten Schwenkstellung, in welcher er um einen Winkel von etwa 50° gegenüber der Achse 18 des optischen Empfängers 16 geneigt ist und hin zur Probe 24 ausgerichtet ist. Die Messanordnung umfasst in dieser Ausführungsform einen vierten Spiegel 28, der unterhalb der Probe 24, d. h. auf der dem zweiten Spiegel 22 gegenüberliegenden Seite der Probe 24 angeordnet ist.

Fig. 6 zeigt die in Fig. 3 gezeigte erste bevorzugte Ausführungsform der Messanordnung in einer Stellung für eine Dunkelmessung. Hierfür befindet sich der zweite Spiegel 22 in einer vierten Schwenkstellung, in welcher er senkrecht zur Achse 18 des optischen Empfängers 16 angeordnet und hin zum optischen Empfänger 16 ausgerichtet ist. Der optische Empfänger 16 empfängt in dieser Stellung kein Messlicht der Messlichtquelle.

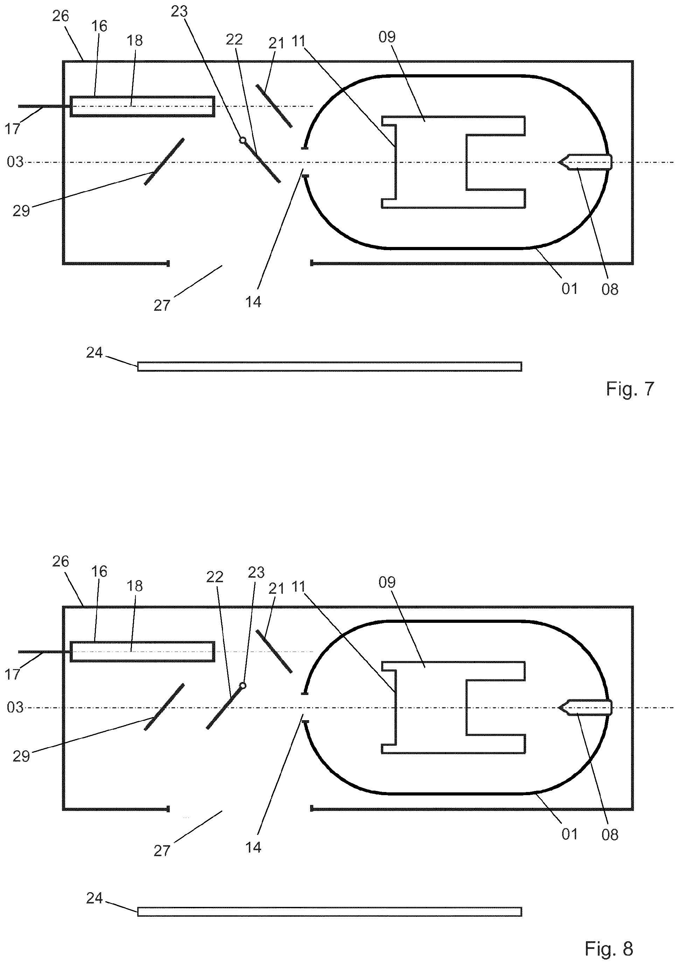

Fig. 7 zeigt einen Querschnitt durch eine zweite bevorzugte Ausführungsform der erfindungsgemäßen Messanordnung. Diese Ausführungsform weist die in Fig. 1 gezeigte Messlichtquelle, umfassend u. a. den Hohlkörper 01, die Lichtquelle 08, die Reflexionsscheibe 11 und den Lichtaustritt 14, auf. Diese zweite Ausführungsform umfasst wiederum den optischen Empfänger 16, an den der Lichtwellenleiter 17 angeschlossen ist, welcher zu dem Spektrometer (nicht gezeigt) geführt ist. Der optische Empfänger 16 weist die Achse 18 auf, in welcher er Messlicht empfangen kann. Die Achse 18 des optischen Empfängers 16 ist parallel zur Achse 03 der Messlichtquelle angeordnet.

Die zweite bevorzugte Ausführungsform der Messanordnung umfasst weiterhin den starr angeordneten ersten Spiegel 21, der bei dieser zweiten Ausführungsform in der Achse 18 des optischen Empfängers 16 liegt, sodass er Messlicht, welches auf ihn trifft, auf den optischen Empfänger 16 reflektiert. Der erste Spiegel 21 ist gegenüber der Achse 18 des optischen Empfängers 16 um einen Winkel von etwa 45° geneigt. Hierdurch ist der erste Spiegel 21 hin zu dem zweiten Spiegel 22 ausgerichtet, der um die Schwenkachse 23 schwenkbar ist.

Der zweite Spiegel 22 ist in einer ersten Schwenkstellung gezeigt, in welcher er bei dieser zweiten Ausführungsform um einen Winkel von 49° gegenüber der Achse 03 der Messlichtquelle geneigt ist und hin zum ersten Spiegel 21 ausgerichtet ist. Da sich der zweite Spiegel 22 in seiner ersten Schwenkstellung in der Achse 03 der Messlichtquelle befindet, trifft das aus dem Lichtaustritt 14 austretende Messlicht auf den zweiten Spiegel 22, von welchem es zum ersten Spiegel 21 reflektiert wird, von welchem es weiter auf den optischen Empfänger 16 reflektiert wird. Das Messlicht fällt somit nicht auf die zu vermessende Probe 24. Somit dient die erste Stellung des zweiten Spiegels 22 bei dieser zweiten Ausführungsform für eine Referenzmessung, da unmittelbar das aus der Messlichtquelle austretende und von den beiden Spiegeln 21, 22 reflektierte Messlicht mithilfe des optischen Empfängers 16 gemessen wird.

Die zweite Ausführungsform der Messanordnung umfasst wiederum das Gehäuse 26, in welchem die Messlichtquelle, der optische Empfänger 16 und die beiden Spiegel 21, 22 angeordnet sind, sodass ein Messkopf ausgebildet ist. Das Gehäuse 26 weist die Messöffnung 27 auf, die über der zu vermessenden Probe 24 zu platzieren ist. Die Probe 24 ist parallel zu der Achse 18 des optischen Empfängers 16 und somit auch parallel zu der Achse 03 der Messlichtquelle anzuordnen.

Fig. 8 zeigt die in Fig. 7 gezeigte zweite Ausführungsform der Messanordnung in einer Stellung für eine Reflexionsmessung. Hierfür befindet sich der zweite Spiegel 22 in einer zweiten Schwenkstellung, in welcher er um einen Winkel von 50° gegenüber der Achse 03 der Messlichtquelle geneigt ist und hin zur Probe 24 ausgerichtet ist.

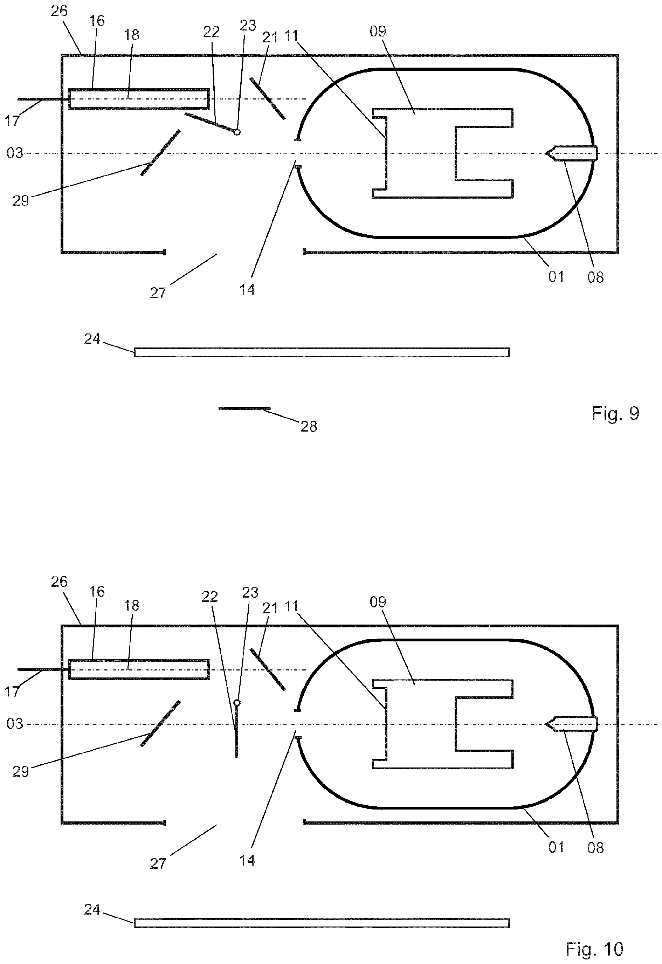

Fig. 9 zeigt die in Fig. 7 gezeigte zweite Ausführungsform der Messanordnung in einer Stellung für eine Transmissionsmessung. Hierfür befindet sich der zweite Spiegel 22 in einer dritten Schwenkstellung, in welcher er um einen Winkel von etwa 20° gegenüber der Achse 03 der Messlichtquelle geneigt und von dieser Achse 03 beabstandet ist. Die Messanordnung umfasst in dieser zweiten Ausführungsform einen dritten Spiegel 29, der auf der Achse 03 der Messlichtquelle angeordnet ist und zum Reflektieren des aus dem Lichtaustritt 14 austretenden Messlichtes zur Probe 24 ausgerichtet ist. Der dritte Spiegel 29 ist um einen Winkel von etwa 50° gegenüber der Achse 18 des optischen Empfängers 16 hin zur Probe 24 geneigt. Die Messanordnung umfasst in dieser zweiten Ausführungsform auch den vierten Spiegel 28, der unterhalb der Probe 24, d. h. auf der dem dritten Spiegel 29 gegenüberliegenden Seite der Probe 24 angeordnet ist.

Fig. 10 zeigt die in Fig. 7 gezeigte zweite Ausführungsform der Messanordnung in einer Stellung für eine Dunkelmessung. Hierfür befindet sich der zweite Spiegel 22 in einer vierten Schwenkstellung, in welcher er senkrecht zur Achse 03 der Messlichtquelle und in dieser Achse 03 angeordnet ist. Der optische Empfänger 16 empfängt in dieser Stellung kein Messlicht der Messlichtquelle.

### Bezugszeichenliste

- 01: Hohlkörper
- 02: Hohlraum
- 03: Achse der Messlichtquelle
- 04: Beleuchtungsraum
- 05: -
- 06: Lichtformungsraum
- 07: Lichtaustrittsraum
- 08: Lichtquelle
- 09: Lichtformungszylinder
- 10: Haltestege
- 11: Reflexionsscheibe
- 12: Kragen
- 13: Öffnung
- 14: Lichtaustritt
- 15: -
- 16: optischer Empfänger
- 17: Lichtwellenleiter
- 18: Achse der optischen Empfängers
- 19: -
- 20: -
- 21: erster Spiegel
- 22: zweiter Spiegel
- 23: Schwenkachse
- 24: Probe
- 25: -
- 26: Gehäuse
- 27: Messöffnung
- 28: vierter Spiegel
- 29: dritter Spiegel

## Patentansprüche

1. Messlichtquelle; umfassend einen Hohlkörper (01) mit einer diffus reflektierenden Innenfläche, in welchem ein konkaver, hohlspiegelförmiger Beleuchtungsraum (04), ein rohrartiger Lichtformungsraum (06) und ein konkaver, hohlspiegelförmiger Lichtaustrittsraum (07) ausgebildet sind, die eine gemeinsame Achse (03) aufweisen, wobei in dem Beleuchtungsraum (04) eine Lichtquelle (08) zum Erzeugen von Licht zumindest teilweise angeordnet ist, wobei der Lichtaustrittsraum (07) einen Lichtaustritt (14) aufweist, wobei sich der Beleuchtungsraum (04) und der Lichtaustrittsraum (07) mit ihren Hohlspiegelformen gegenüberstehen und durch den rohrartigen Lichtformungsraum (06) verbunden sind, und wobei im Hohlkörper (01) eine diffus reflektierende Reflexionsscheibe (11) zum Reflektieren des von der im Lichtaustrittsraum (07) angeordneten Innenfläche des Hohlkörpers (01) reflektierten Lichtes durch den Lichtaustritt (14) nach außerhalb des Hohlkörpers (01) angeordnet ist, **dadurch gekennzeichnet, dass** im Inneren des Lichtformungsraumes (06) ein diffus reflektierender Lichtformungszylinder (09) angeordnet ist, an dessen zum Lichtaustrittsraum (07) gerichteten axialen Ende die Reflexionsscheibe (11) angeordnet ist.

2. Messlichtquelle nach Anspruch 1, **dadurch gekennzeichnet, dass** das durch die Lichtquelle (08) erzeugbare Licht im Hohlkörper (01) mindestens drei Mal reflektiert wird, bevor es aus dem Lichtaustritt (14) tritt, wobei eine der mindestens drei Reflektionen auf der Reflexionsscheibe (11) erfolgt.

3. Messlichtquelle nach Anspruch 1 oder 2, **dadurch gekennzeichnet, dass** die Lichtquelle (08) mehrere Lichtquellenelemente umfasst, welche jeweils durch eine Halogenlampe, durch eine Blitzlampe, durch eine Xenon-Blitzlampe, durch eine Deuteriumlampe, durch einen IR-Strahler, durch eine weißleuchtende LED, durch eine UV-Kathode oder durch eine UV-LED gebildet sind.

4. Messlichtquelle nach einem der Ansprüche 1 bis 3, **dadurch gekennzeichnet, dass** der Lichtformungszylinder (09) und/oder die Reflexionsscheibe (11) dazu ausgebildet ist, die im Lichtaustrittsraum (07) angeordnete Innenfläche des Hohlkörpers (01) gegenüber der Lichtquelle (08) abzuschatten.

5. Messanordnung zum Erfassen eines absoluten Reflexionsspektrums einer Probe (24) und zum Durchführen einer Referenzmessung; umfassend:
- eine Messlichtquelle nach einem der Ansprüche 1 bis 4;
- einen optischen Empfänger (16) zum Empfangen von Messlicht, welcher der Messlichtquelle gegenüberliegend angeordnet ist;
- einen ersten Spiegel (21), der auf der Achse (03) der Messlichtquelle angeordnet ist und zum Reflektieren des aus dem Lichtaustritt (14) austretenden Messlichtes auf die Probe (24) ausgerichtet ist;
- einen zweiten Spiegel (22), der in einer ersten Stellung zum Reflektieren des vom ersten Spiegel (21) reflektierten Messlichtes zum Empfänger (16) ausgerichtet ist, und der in einer zweiten Stellung zum Reflektieren des von der Probe (24) reflektierten Messlichtes zum Empfänger (16) ausgerichtet ist.

6. Messanordnung nach Anspruch 5, **dadurch gekennzeichnet, dass** eine Achse (18) des Empfängers (16) und die Achse (03) der Messlichtquelle parallel angeordnet sind und einen Versatz zueinander aufweisen.

7. Messanordnung nach Anspruch 5 oder 6, **dadurch gekennzeichnet, dass** der erste Spiegel (21) um einen Winkel von 45° gegenüber der Achse (03) der Messlichtquelle geneigt ist.

8. Messanordnung nach einem der Ansprüche 5 bis 7, **dadurch gekennzeichnet, dass** der zweite Spiegel (22) in seiner ersten Stellung um einen Winkel von 45° gegenüber der Achse (18) des Empfängers (16) hin zum ersten Spiegel (21) geneigt ist, und dass der zweite Spiegel (22) in seiner zweiten Stellung um einen Winkel von 45° zur Achse (18) des Empfängers (16) hin zur Probe (24) geneigt ist.

9. Messanordnung nach einem der Ansprüche 5 bis 8, **dadurch gekennzeichnet, dass** der zweite Spiegel (22) zwischen seiner ersten Stellung, seiner zweiten Stellung und einer dritten Stellung schwenkbar ist, wobei die Messanordnung weiterhin einen vierten Spiegel (28) umfasst, der auf der dem ersten Spiegel (21) gegenüberliegenden Seite der Probe (24) angeordnet ist und zur Reflektion des vom ersten Spiegel (21) reflektierten durch die Probe (24) transmittierten Messlichtes zurück zur Probe (24) und zum zweiten Spiegel (22) ausgebildet ist.

10. Messanordnung zum Erfassen eines absoluten Reflexionsspektrums einer Probe (24) und zum Durchführen einer Referenzmessung; umfassend:
- eine Messlichtquelle nach einem der Ansprüche 1 bis 4;
- einen optischen Empfänger (16) zum Empfangen von Messlicht, welcher der Messlichtquelle gegenüberliegend angeordnet ist;
- einen ersten Spiegel (21), der auf einer Achse (18) des optischen Empfängers (16) angeordnet ist und zum Reflektieren des von der Probe (24) reflektierten Messlichtes zum optischen Empfänger (16) ausgerichtet ist; und
- einen zweiten Spiegel (22), der in einer ersten Stellung zum Reflektieren des aus dem Lichtaustritt (14) austretenden Messlichtes auf den ersten Spiegel (21) ausgerichtet ist, und der in einer zweiten Stellung zum Reflektieren des aus dem Lichtaustritt (14) austretenden Messlichtes auf die Probe (24) ausgerichtet ist.

11. Messanordnung nach Anspruch 10, **dadurch gekennzeichnet, dass** die Messlichtquelle, der optische Empfänger (16), der erste Spiegel (21) und der zweite Spiegel (22) dazu ausgebildet sind, gemeinsam auf einer Seite der Probe (24) angeordnet zu werden.

12. Messanordnung nach Anspruch 10 oder 11, **dadurch gekennzeichnet, dass** der zweite Spiegel (22) durch ein Schwenken des zweiten Spiegels (22) von seiner ersten Stellung in seine zweite Stellung und umgekehrt stellbar ist, wobei eine Achse (23) des Schwenkens des zweiten Spiegels (22) senkrecht zur Achse (03) der Messlichtquelle und parallel zur Oberfläche der Probe (24) angeordnet ist, und wobei die Achse (23) des Schwenkens des zweiten Spiegels (22) zwischen der Achse (03) der Messlichtquelle und der Achse (18) des optischen Empfängers (16) angeordnet ist.

13. Messanordnung nach einem der Ansprüche 10 bis 12, **dadurch gekennzeichnet, dass** der zweite Spiegel (22) zwischen seiner ersten Stellung, seiner zweiten Stellung und einer dritten Stellung stellbar ist, wobei die Messanordnung weiterhin einen dritten Spiegel (29) umfasst, der auf der Achse (03) der Messlichtquelle angeordnet ist und zum Reflektieren des aus dem Lichtaustritt (14) austretenden Messlichtes zur Probe (24) ausgerichtet ist, und wobei die Messanordnung weiterhin einen vierten Spiegel (28) umfasst, der auf der dem dritten Spiegel (29) gegenüberliegenden Seite der Probe (24) angeordnet ist und zur Reflektion des vom dritten Spiegel (29) reflektierten durch die Probe (24) transmittierten Messlichtes zurück zur Probe (24) und zum ersten Spiegel (21) ausgerichtet ist.

14. Messanordnung nach einem der Ansprüche 10 bis 13, **dadurch gekennzeichnet, dass** der zweite Spiegel (22) zwischen seiner ersten Stellung, seiner zweiten Stellung und einer vierten Stellung stellbar ist, wobei zweite Spiegel (22) in seiner vierten Stellung so ausgerichtet ist, dass er das aus dem Lichtaustritt (14) tretende Messlicht zurück auf den Lichtaustritt (14) reflektiert.

## Claims

1. Measuring light source, comprising: a hollow body (01) having a diffusely reflective inner surface in which a concave, concave mirror-shaped illumination space (04), a tubular light shaping space (06), and a concave, concave mirror-shaped light exit space (07) are formed, which have a shared axis (03); wherein a light source (08) for generating light is situated at least partially in the illumination space (04), wherein the light exit space (07) has a light exit (14), and the illumination space (04) and the light exit space (07) have concave mirror shaped surfaces facing one another, the illumination space and the light exit space being connected by the tubular light shaping space (06), wherein a diffusely reflecting reflective disk (11) for reflecting the light, reflected from the inner surface of the hollow body (01) situated in the light exit space (07), through the light exit (14) to outside the hollow body (01) is situated in the hollow body (01), **characterized in that** a diffusely reflective light-shaping cylinder (09) is situated inside the light shaping space (06), the reflective disk (11) being situated on the axial end of the light-shaping cylinder facing the light exit space (07).

2. Measuring light source according to Claim 1, **characterized in that** the light that is generatable by the light source (08) is reflected in the hollow body (01) at least three times before it passes from the light exit (14), one of the at least three reflections taking place on the reflective disk (11).

3. Measuring light source according to Claim 1 or 2, **characterized in that** the light source (08) includes multiple light source elements, each of which is formed by a halogen lamp, a flash lamp, a xenon flash lamp, a deuterium lamp, an IR emitter, a white LED, a UV cathode, or a UV LED.

4. Measuring light source according to one of Claims 1 to 3, **characterized in that** the light-shaping cylinder (09) and/or the reflective disk (11) are/is designed to shade the inner surface of the hollow body (01) situated in the light exit space (07) from the light source (08).

5. Measuring system for detecting an absolute reflection spectrum of a sample (24) and for carrying out a reference measurement, comprising:
- a measuring light source according to one of Claims 1 to 4;
- an optical receiver (16) situated opposite from the measuring light source, for receiving measuring light;
- a first mirror (21) that is situated on the axis (03) of the measuring light source and aligned for reflecting the measuring light, exiting the light exit (14), onto the sample (24);
- a second mirror (22) which in a first position is aligned for reflecting the measuring light, reflected from the first mirror (21), to the receiver (16), and which in a second position is aligned for reflecting the measuring light, reflected from the sample (24), to the receiver (16).

6. Measuring system according to Claim 5, wherein an axis (18) of the receiver (16) and the axis (03) of the measuring light source are situated in parallel and are offset relative to one another.

7. Measuring system according to Claim 5 or 6, **characterized in that** the first mirror (21) is inclined at an angle of 45° with respect to the axis (03) of the measuring light source.

8. Measuring system according to one of Claims 5 to 7, **characterized in that** the second mirror (22) in its first position is inclined toward the first mirror at an angle of 45° with respect to the axis (18) of the receiver (16), and the second mirror (22) in its second position is inclined toward the sample (24) at an angle of 45° with respect to the axis (18) of the receiver (16).

9. Measuring system according to one of Claims 5 to 8, **characterized in that** the second mirror (22) is pivotable between its first position, its second position, and a third position, the measuring system also including a fourth mirror (28) that is situated on the side of the sample opposite from the first mirror (21), and is designed for reflecting the measuring light, reflected from the first mirror (21) and transmitted by the sample (24), back to the sample (24) and to the second mirror (22).

10. Measuring system for detecting an absolute reflection spectrum of a sample (24) and for carrying out a reference measurement, comprising:
- a measuring light source according to one of Claims 1 to 4;
- an optical receiver (16) situated opposite from the measuring light source, for receiving measuring light;
- a first mirror (21) that is situated on an axis (18) of the optical receiver (16) and aligned for reflecting the measuring light, reflected from the sample (24), to the optical receiver (16); and
- a second mirror (22), which in a first position is aligned for reflecting the measuring light, exiting the light exit (14), to the first mirror (21), and which in a second position is aligned for reflecting the measuring light, exiting the light exit (14), to the sample.

11. Measuring system according to Claim 10, wherein the measuring light source, the optical receiver (16), the first mirror (21), and the second mirror (22) are designed to be situated together on one side of the sample (24).

12. Measuring system according to Claim 10 or 11, **characterized in that** the second mirror (22) is adjustable by pivoting the second mirror (22) from its first position into its second position, and vice versa, an axis (23) of pivoting the second mirror (22) being situated perpendicular to the axis (03) of the measuring light source and parallel to the surface of the sample (24), and the axis (23) of pivoting the second mirror (22) being situated between the axis (03) of the measuring light source and the axis (18) of the optical receiver (16).

13. Measuring system according to one of Claims 10 to 12, **characterized in that** the second mirror (22) is adjustable between its first position, its second position, and a third position, the measuring system also including a third mirror (29) that is situated on the axis (03) of the measuring light source and oriented toward the sample (24) for reflecting the measuring light exiting the light exit (14), and the measuring system also including a fourth mirror (28) that is situated on the side of the sample (24) opposite from the third mirror (29), and is aligned for reflecting the measuring light, reflected from the third mirror (29) and transmitted by the sample (24), back to the sample (24) and to the first mirror (21).

14. Measuring system according to one of Claims 10 to 13, **characterized in that** the second mirror (22) is adjustable between its first position, its second position, and a fourth position, the second mirror (22) in its fourth position being aligned in such a way that it reflects the measuring light, exiting the light exit (14), back to the light exit (14).

## Revendications

1. Source lumineuse de mesure ; comprenant un corps creux (01) pourvu d'une surface intérieure à réflexion diffuse, dans lequel sont conçus un espace d'éclairage (04) concave, en forme de miroir concave, un espace de formation de lumière (06) tubulaire et un espace de sortie de lumière (07) concave, en forme de miroir concave, qui présentent un axe commun (03), dans l'espace d'éclairage (04) étant placée au moins en partie une source lumineuse (08) destinée à générer de la lumière, l'espace de sortie de lumière (07) comportant une sortie de lumière (14), l'espace d'éclairage (04) et l'espace de sortie de lumière (07) étant placés en vis-à-vis par leur forme de miroir concave et étant reliés par l'espace de formation de lumière (06) tubulaire et dans le corps creux (01) étant placée un vitre réfléchissante (11) à réflexion diffuse, destinée à réfléchir la lumière réfléchie par la surface intérieure du corps creux (01) placée dans l'espace de sortie de lumière (07) à travers la sortie de lumière (14) vers l'extérieur du corps creux (01), **caractérisée en ce qu'**à l'intérieur de l'espace de formation de lumière (06) est placé un cylindre de formation de lumière (09) à réflexion diffuse, sur l'extrémité axiale dirigée vers l'espace de sortie de lumière (07) duquel est placée la vitre réfléchissante (11) .

2. Source lumineuse de mesure selon la revendication 1, **caractérisée en ce que** la lumière susceptible d'être générée par la source lumineuse (08) est réfléchie au moins trois fois dans le corps creux (01) avant de sortir par la sortie de lumière (14), l'une des au moins trois réflexions ayant lieu sur la vitre réfléchissante (11).

3. Source lumineuse de mesure selon la revendication 1 ou 2, **caractérisée en ce que** la source lumineuse (08) comprend plusieurs éléments de source lumineuse, lesquels sont formés chacun par une ampoule halogène, par une lampe flash, par une lampe flash au xénon, par une lampe au deutérium, par un diffuseur d'IR, par une DEL à lumière blanche, par une cathode à UV ou par une DEL à UV-LED.

4. Source lumineuse de mesure selon l'une quelconque des revendications 1 à 3, **caractérisée en ce que** le cylindre de formation de lumière (09) et/ou la vitre réfléchissante (11) sont conçus pour obscurcir la surface intérieure du corps creux (01) placée dans l'espace de sortie de lumière (07) par rapport à la source lumineuse (08).

5. Agencement de mesure, destiné à détecter un spectre de réflexion absolu d'une éprouvette (24) et à procéder à une mesure de référence ; comprenant :
- une source lumineuse de mesure selon l'une quelconque des revendications 1 à 4 ;
- un récepteur optique (16), destiné à réceptionner de la lumière de mesure, lequel est placé au vis-à-vis de la source lumineuse de mesure ;
- un premier miroir (21), qui est placé sur l'axe (03) de de la source lumineuse de mesure et qui pour réfléchir la lumière de mesure sortant par la sortie de lumière (14) est orienté sur l'éprouvette (24) ;
- un deuxième miroir (22), qui dans une première position, pour réfléchir la lumière de mesure réfléchie par le premier miroir (21) est orienté vers le récepteur (16), et qui dans une deuxième position, pour réfléchir la lumière de mesure réfléchie par l'éprouvette (24) est orienté vers le récepteur (16).

6. Agencement de mesure selon la revendication 5, **caractérisé en ce qu'**un axe (18) du récepteur (16) et l'axe (03) de la source lumineuse de mesure sont placés en parallèle et présentent un déport mutuel.

7. Agencement de mesure selon la revendication 5 ou 6, **caractérisé en ce que** le premier miroir (21) est incliné d'un angle de 45° par rapport à l'axe (03) de la source lumineuse de mesure.

8. Agencement de mesure selon l'une quelconque des revendications 5 à 7, **caractérisé en ce que** dans sa première position, le deuxième miroir (22) est incliné vers le premier miroir (21) d'un angle de 45° par rapport à l'axe (18) du récepteur (16), et **en ce que** dans sa deuxième position, le deuxième miroir (22) est incliné vers l'éprouvette (24) d'un angle de 45° par rapport à l'axe (18) du récepteur (16).

9. Agencement de mesure selon l'une quelconque des revendications 5 à 8, **caractérisé en ce que** le deuxième miroir (22) est susceptible de pivoter entre sa première position, sa deuxième position et une troisième position, l'agencement de mesure comprenant par ailleurs un quatrième miroir (28) qui est placé sur le côté de l'éprouvette (24) au regard du premier miroir (21) et qui est conçu pour réfléchir la lumière de mesure transmise par le premier miroir (21) à travers l'éprouvette (24) en retour vers l'éprouvette (24) et vers le deuxième miroir (22).

10. Agencement de mesure, destiné à détecter un spectre de réflexion absolu d'une éprouvette (24) et à procéder à une mesure de référence ; comprenant :
- une source lumineuse de mesure selon l'une quelconque des revendications 1 à 4 ;
- un récepteur optique (16), destiné à réceptionner de la lumière de mesure, lequel est placé au vis-à-vis de la source lumineuse de mesure, pour réceptionner de la lumière de mesure ;
- un premier miroir (21), lequel est placé sur un axe (18) du récepteur optique (16) et pour réfléchir la lumière de mesure réfléchie par l'éprouvette (24), est orienté vers le récepteur optique (16) ; et
- un deuxième miroir (22), qui dans une première position, pour réfléchir la lumière de mesure sortant de la sortie de lumière (14) est orienté vers le premier miroir (21) et qui dans une deuxième position, pour réfléchir la lumière de mesure sortant de la sortie de lumière (14) est orienté vers l'éprouvette (24).

11. Agencement de mesure selon la revendication 10, **caractérisé en ce que** la source lumineuse de mesure, le récepteur optique (16), le premier miroir (21) et le deuxième miroir (22) sont conçus pour être placés en commun sur un côté de l'éprouvette (24).

12. Agencement de mesure selon la revendication 10 ou 11, **caractérisé en ce que** par un pivotement du deuxième miroir (22), le deuxième miroir (22) est réglable de sa première position dans sa deuxième position et inversement, un axe (23) du pivotement du deuxième miroir (22) étant placé à la perpendiculaire de l'axe (03) de la source lumineuse de mesure et à la parallèle de la surface de l'éprouvette (24), et l'axe (23) du pivotement du deuxième miroir (22) étant placé entre l'axe (03) de la source lumineuse de mesure et l'axe (18) du récepteur optique (16).

13. Agencement de mesure selon l'une quelconque des revendications 10 à 12, **caractérisé en ce que** le deuxième miroir (22) est réglable entre sa première position, sa deuxième position et une troisième position, l'agencement de mesure comprenant par ailleurs un troisième miroir (29) qui est placé sur l'axe (03) de la source lumineuse de mesure et pour réfléchir la lumière de mesure sortant de la sortie de lumière (14) est orienté vers l'éprouvette (24) et l'agencement de mesure comprenant par ailleurs un quatrième miroir (28) qui est placé sur le côté de l'éprouvette (24) au vis-à-vis du troisième miroir (29) et qui est orienté pour réfléchir la lumière de mesure réfléchie par le troisième miroir (29), transmise à travers l'éprouvette (24) en retour vers l'éprouvette (24) et vers le premier miroir (21).

14. Agencement de mesure selon l'une quelconque des revendications 10 à 13, **caractérisé en ce que** le deuxième miroir (22) est réglable entre sa première position, sa deuxième position et une quatrième position, dans sa quatrième position, le deuxième miroir (22) étant orienté de sorte à réfléchir la lumière de mesure sortant de la sortie de lumière (14) en retour vers la sortie de lumière (14).
